# EUROPEAN PATENT SPECIFICATION

(11) **EP 0 989 938 B1**
(45) Date of publication and mention of the grant of the patent: **02.01.2003**
(21) Application number: 98931196.4
(22) Date of filing: 24.06.1998
(51) Int. Cl.: B62D 51/00, B62D 51/04, B62D 55/04

(54) **SELFMOVING EQUIPMENT**
SELBSTFAHRENDE APPARATUR
SYSTEME AUTOMOTEUR

(30) Priority: 24.06.1997 SK 85497
(43) Date of publication of application: 05.04.2000
(73) Proprietor: Comi, spol s.r.o., 066 01 Humenné (SK)
(72) Inventor: KOMISAK, Jan, 09101Stropkov (SK)
(74) Representative: Jeck, Anton, Dipl.-Ing.
(86) International application number: SK9800009
(87) International publication number: WO98058835

(56) References cited:
- US-A- 4 026 373
- US-A- 4 645 022
- US-A- 4 747 457

## Description

The present invention relates to a self-propelled vehicle according to the preamble of claim 1. A self-propelled vehicle in accordance with the present invention is particularly suitable for the transportation or dragging of tree trunks through dense and inaccessible terrain. The basic unit of a vehicle in accordance with the present invention can be provided with wheels and a draw rod. Various additional implements, particularly suitable for agricultural applications, can be attached to the back of the vehicle.

### Description of the related art.

A self-propelled vehicle according to the preamble of claim 1 is known from US-A-4026373. The means for driving such vehicle, especially the engine and the gear box, and other heavy components thereof; are supported by a frame structure that is located above the vehicle's body. Due to this arrangement, such vehicle is prone to tipping over, especially since such vehicle's centre of gravity is high and its body is narrow. For the above reasons, tubular members are required that are connectable to the frame structure of such vehicle, which enable a second operator to hold and control such self-propelled vehicle.

The main disadvantages of the vehicle of US-A-4026373 is that the driving means are unprotected and moreover, the arrangement of the driving means and other heavy components upon the vehicle's body requires the need for a second operator.

A further self-propelled vehicle is disclosed by US-A-4645022. Such US patent discloses a vehicle for carrying or dragging a load. Such vehicle comprises an open chassis upon which is located an engine for propelling the vehicle. Two parallel tracks are provided on either side of the chassis, each track running over a plurality of wheels, wherein each track is driven by at least one of said wheels. The chassis includes, or is provided with, a control lever. A dutch is connected between the engine and each of the tracks, so that either one of the tracks can be disengaged. The control lever is adapted to actuate one or the other of the clutches by means of a linkage so that the clutch interrupts the transmission of motion to the relevant track. Such vehicle may also be provided with braking means that can act upon the tracks.

The main disadvantages associated with the vehicle of US-A-4645022 is that its chassis and tracks are unprotected and moreover, its range of directional movement is limited.

### Summary of the invention.

It is believed that a setf-propelled vehicle in accordance with the present invention overcomes the problems associated with known of vehicles of this type, as outlined above.

A basic embodiment of a vehicle in accordance with the present invention includes a body within which is located a engine that drives the transmission gear of a gearbox via a variable speed gear box. The gearbox includes a disconnectable countershaft that drives both a second disconnectable drive shaft and a third drive disconnectable shaft. The body of a basic embodiment of a self-propelled vehicle in accordance with the present invention has the shape of a rounded pentagon. The vehicle is provided with at least one track located around the body. A common axle protrudes from the sidewalls of the body to which wheels may be attached. The vehicle further includes a handle upon which is located a housing for housing the operating elements or controls of the vehicle. Movement of a vehicle in accordance with the present invention is effected by the track and/or wheels, which in turn are driven by three rollers associated with, or located within, the housing. Two of such rollers, which are larger in diameter than the remaining roller, are located on the end of the longer diagonal of the lower and upper wall of the body, whereas the remaining, smaller roller, is located in the lower wall in the end of a shorter diagonal between the lower and upper wall of the body of the vehicle. The upper wall, compared with the lower wall, bevels backward in intervals of 10°-45°, and the wall continues to the upper wall area by a minimum bevelled angle of 40°. The backwards bevelled body wall may further be provided with wheel attachments, which are adapted to receive a second set of wheels locatable on the same axis as the wheels located on the common axle. The attachment of the second set of wheels to a self-propelled vehicle in accordance with the present invention increases the vehicle's mobility on terrain. The body of the self-propelled vehicle may be provided with two parallel tracks, which protrude over the sides of the rounded pentagon shaped body. Movement of the vehicle in accordance with the present invention can be effected by the track and/or by the wheels. For example, when motion is effected by the wheels of the vehicle, and the vehicle enters moorland, the tracks can be activated enabling the vehicle to overcome any obstacles located within the moorland. One of the possible modifications is that a vehicle In accordance with the present invention can be provided with two parallel tracks that protrude over the sides of the body of the vehicle. Additionally, a self-propelled vehicle in accordance with the present invention is provided with a brake wheel attached, or joined, to a disconnectable countershaft; the brake wheel being acted upon by brake plates or pads present on a segment with dextral lead and a segment with a levorotary lead, which are the same as the lead of the helix which is operated by a handle. By turning such handle to the right, the brake plates will move towards the brake wheel such that the vehicle will either slow down or stop. By turning the handle the other way, the brake plates will move away from the brake wheel such that movement of the vehicle is no longer hindered by the brake plates.

In a preferred embodiment, the second disconnectable drive shaft is connected via the chain wheels with the drive of winding equipment, which is locatable on a vehicle in accordance with the present invention. The central toothed wheel of the winding equipment is joined, or connected, to the second disconnectable shaft and can impart movement to the internal toothed wheel via the satellite toothed wheels surrounding same, and the driver. At the same time, the central toothed wheel is mechanically joined to the drum and brake plate. In the event that the driver of the satellite toothed wheels are not mechanically joined to the drum. the rope can be freely reeled from the drum. If braking is effected through the internal toothed wheel on the external perimeter, that is, through the pneumatically operated brake belt, the satellite toothed wheels will start to rotate on the internal perimeter of the internal toothed wheel and the driver will start to rotate about its own axis, such that the winding rope drum begins to work. The drum of the winding equipment consists of two parts. The first part is provided with a planet gear box and the other is provided with a pneumatically operated multi-plate clutch. In a preferred embodiment, the winding equipment may have a planet gear box on both sides of the drum. In a further preferred embodiment, the drum may have a planet gear box on one side thereof and a gearbox, with braking equipment on the other. In an additional preferred embodiment, both parts of the drum have a planet gearbox and the braking equipment is provided in the middle of the drum. The winding equipment can be used in the field of forestry to drag tree trunks through dense and inaccessible terrain. The rope of the winding equipment may be used for towing wood or tree trunks, towing various broken down vehicles, towing various agricultural implements, especially on sloped terrain, and in the building industry for lifting heavy weights or building materials via pulleys.

In a further embodiment, a third disconnectable drive shaft is joined by two chain wheels to two independent drives of a half axle, which are joined through the driving wheels with guide wheels. Each half axle is connected to a separate multi-plate clutch, and both half axles are joined via toothed wheels, which In turn engage with bevelled pinions. The third disconnectable drive shaft is for driving a one track, a two track, a two-wheeled or a four-wheeled version of a vehicle in accordance with the present invention. It drives via the two chain wheels and drive chains and the two independent drives of the half axle with multi-plate clutch. In the two track version, the direction of the vehicle can be changed, or the vehicle can be turned around, by switching on the bevelled pinions at the same time. For the basic one track version, driving of the track is effected by the half axles through the driving and guiding wheels. The drives of the half axles, which are driven by the gear box through the chain wheels, are operated by the lever. Even if one of the multi-plate clutches is disconnected, adequate drive of the half axle is achieved. When one of the half axles is driven, the vehicle will turn fluently in the opposite direction. By operating the gear and the auxiliary lever at the same time, which are both located in the housing on the handle, thel half axle and the bevelled pinions will engage, which will result in the vehicle turning around on its own axis. The skilled person will appreciate that a major advantage associated with a vehicle in accordance with the present invention is that up until now, small wheeled vehicles were not able to fully turn around on their own axis, which is particularly advantageous when the vehicle is working in confined spaces.

A vehide in accordance with the present invention, when provided with winding equipment, can be used for dragging tree trunks after they have been cut down or felled in dense and inaccessible terrain. The tree trunks can be dragged to the timber store or timber yard by being hauled by the rope, or by the tackle on the carrying rope.

The vehicle of the present invention, when provided with the winding equipment, can also be used to provide a mobile ski lift for the lifting of skiers in winter. Hoisting equipment can also be attached to the body of the vehicle.

Two wheeled or four wheeled trailers can be attached on the hoisting equipment. In addition, a carrier for hauling the tree trunks to the timber store or yard can also be attached to the hoisting equipment, Another possible advantageous construction is that a four-wheeled version of a vehicle in accordance with the present invention may be provided with a three point hitch adapted to receive all agricultural implements. Further preferably, a snowplough or rotary snowplough can be attached to the front of the vehicle, and a metal or plastic roller may be attached to the back of the three point hitch. This enables the front part of a self-propelled vehicle in accordance with the present invention to be used to plough snow and the back part to be used to lay out a ski track or slope.

It will be appreciated from the above, that a self-propelled vehicle in accordance with the present invention has many uses and hence, much utility. It is to be understood that the examples of the various alternatives of construction of the vehicle and the possibilities for its use are not restricted in any way.

### Brief description of the drawings.

Non-limiting embodiments of a self-propelled vehicle in accordance with the present invention will now be described by way of example and with reference to the accompanying drawings, in which:
Fig. 1 is a cross-sectional view of the body of a self-propelled vehicle in accordance with the present invention;
Fig. 2 is a side view of a self-propelled in accordance with the present invention;
Fig. 3 is a plan view from below of the vehicle of Fig. 2;
Fig. 4 is a side view of the vehicle of Fig. 1 when provided with two wheels;
Fig. 5 is a plan view from below of the self-propelled vehicle of Fig. 4;
Fig. 6 is a side view of a self-propelled vehicle in accordance with the present invention when provided with four wheels;
Fig. 7 illustrates a plan view from below of the vehicle of Fig. 6;
Fig. 8 is a plan view from below of a self-propelled vehicle in accordance with the present invention when provided with two tracks;
Fig. 9 illustrates the brake wheel of the vehicle of the present invention;
Fig. 10 is a side view of the winding equipment;
Fig. 11 illustrates the drum of the winding equipment with universal gear box and multi-plate clutch;
Fig. 12 illustrates the drum of the winding equipment wherein both parts of the drum have the universal gear box within it;
Fig. 13 illustrates the drum of the winding equipment wherein the universal gear box and the wheels are set;
Fig. 14 illustrates the drum of the winding material and the location of the braking equipment within the middle of the drum;
Fig. 15 illustrates the axle of the self-propelled vehicle;

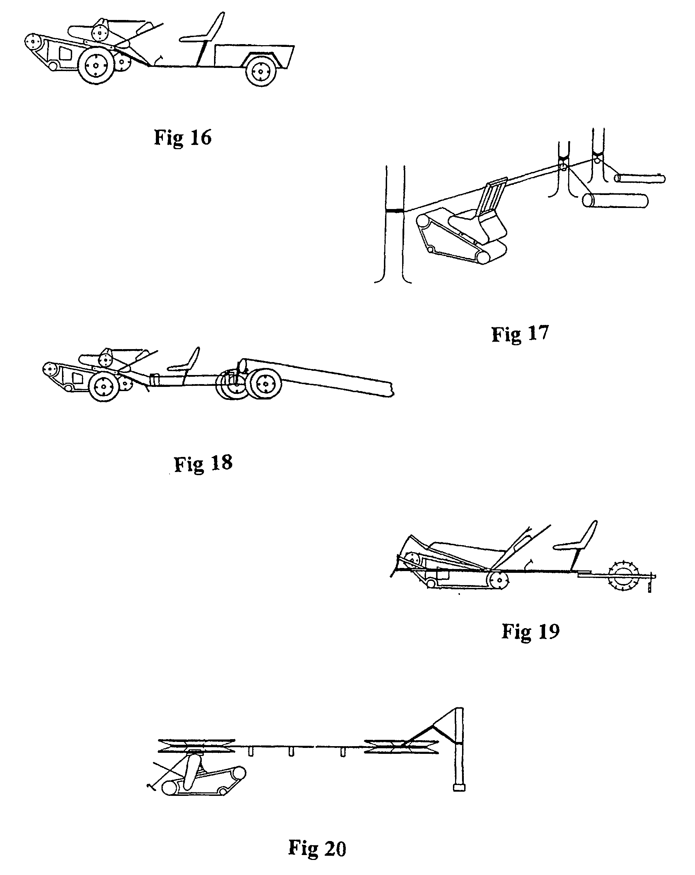

Fig. 16 is a side view of a self-propelled vehicle in accordance with the present invention when connected to a two-wheeled trailer;
Fig. 17 illustrates the self-propelled vehicle when dragging tree trunks;
Fig. 18 illustrates a self-propelled vehicle when provided with a carrier;
Fig. 19 illustrates a self-propelled vehicle in accordance with the present invention when provided with a snowplough; and
Fig. 20 illustrates a self-propelled vehicle in accordance with the present invention when attached to a mobile ski lift.

### Description of a preferred, non-limiting, embodiment

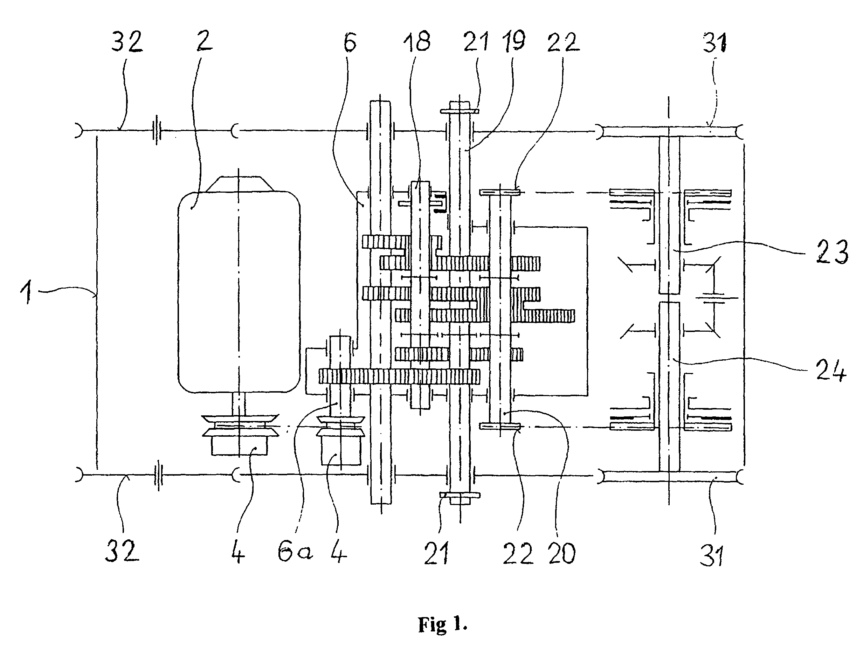

As illustrated in Fig. 1. within the body 1 of a basic embodiment of a self-propelled vehicle in accordance with the present invention there is located a four-stroke engine 2, which has an electric ignition.

Within the body 1 there is located a gear box 6 which is driven by engine 2, having a variable speed gear box 4, via the pinion 6a and disconnectable counter shaft 18. Movement of a second drive shaft 19 and third drive shaft 20 is also driven by gear box 6.

At least one track 13 surrounds the body 1; such track 13 passing over walls 7,8,9,10 and 11 of the body 1.

A common axle 14, to which wheels 47 may be attached, protrudes from side walls 12 of body 1; such common axle 14 extending or protruding passed the sides of the track 13.

A handle 51 also extends from the side walls 12, on which may be located a housing 52 in which the operating controls for the vehicle are located.

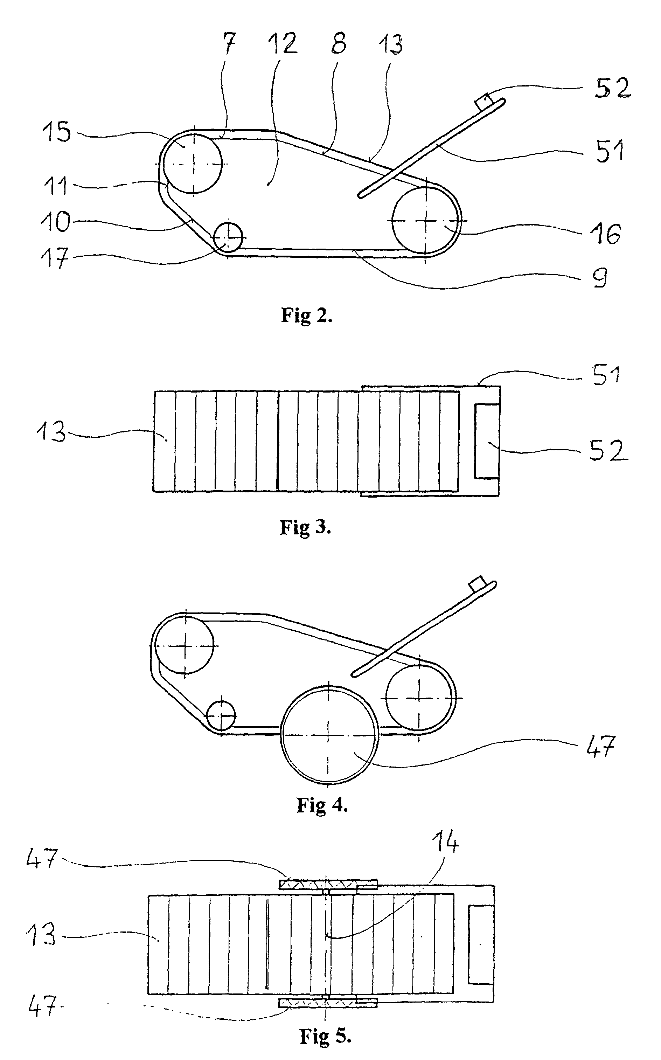

As illustrated in Fig. 2, the body 1 of the vehicle has the shape of a rounded pentagon. Around the walls 7,8,9,10 and 11 of the body 1 there is located at least one track 13. Wheels 47 (see Figs. 4 and 5) can be joined or attached, to the common axle 14, which extends or protrudes beyond the sides of the track 13.

Movement of the self-propelled vehicle may be effected by track 13 and/or wheels 47. Rollers 15, 16, 17, which are located in the corners of walls 7 and 11,8 and 9, and 9 and 10, impart movement to the wheels 47 and track 13. Rollers 15, 16, which have a larger diameter than roller 17, are located in the corners of walls 7 and 11, and 9 and 8 respectively, whereas roller 17 is located in the corner of wall 9 and 10 (see Fig. 2).

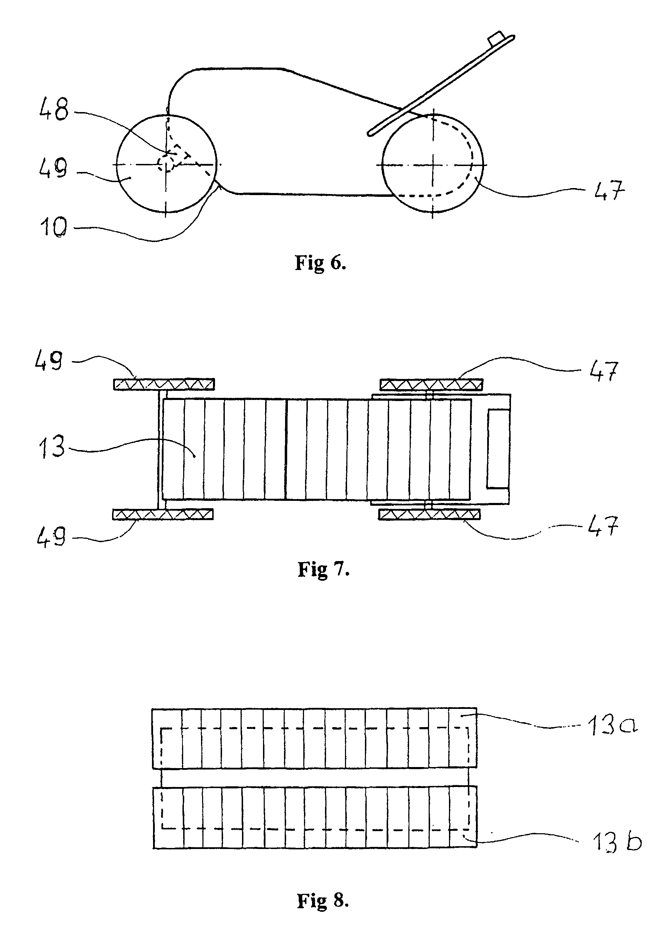

As illustrated in Fig. 1, body 1 has a horizontal upper wall 7 and a horizontal bottom wall 9 which are connected on the back via a first sloped wall 8 and on the front via a vertical wall 11 and a second sloped wall 10. Second sloped wall 10 of body 1 may be further provided with wheel attachment members 48 to which a further set of wheels 49 may be attached. When such further set of wheels 49 are attached to the wheel attachment members 48 they are on the same axis as wheels 47 (see Figs. 6 and 7). The attachment of a second set of wheels 49 to a vehicle in accordance with the.present invention increases its mobility in terrain.

One of the advantages of a self-propelled vehicle in accordance with the present invention is that same can be modified to include two tracks 13a and 13b. which are located around the body 1 on walls 7, 8, 9, 10, 11. and which protrude over side walls 12 (see Fig. 8).

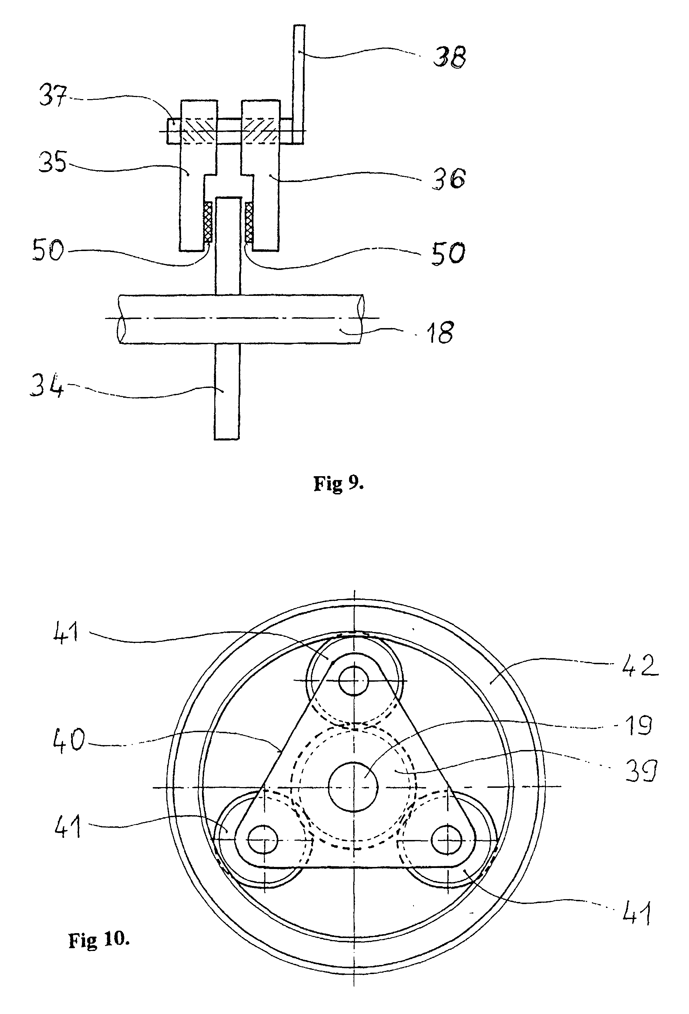

The body 1 is mounted on, or located on, disconnecting countershaft 18, which is connected to a brake wheel 34, upon which brake plates or pads 50 may act. As illustrated (see Fig. 9), brake plates 50 are located on jaws 35, 36, which are displaceably mounted on shaft 37, and operable by handle 38. By turning the handle 38 to the right, jaws 35 and 36 will move towards one another such that brake plates 50 will come into contact with brake wheel 34. As a result thereof, the vehicle will slow down or stop. Movement of the handle 38 in the opposite direction will result in the opening of jaws 35 and 36, such that the brake plates 50 will no longer act upon brake wheel 34 and hence, movement of the vehicle will no longer be inhibited.

Within the body 1, second disconnecting or disengageable drive shaft 19 is connected via chain wheels 21 to the drive of winding equipment 33. As illustrated (see Fig. 10), a central toothed wheel 39 engages with, and is surrounded by, a number of satellite toothed wheels 41, which in turn engage with a toothed surface provided on an internal surface of wheel 42. Central toothed wheel 39 is connected to a driver 40 via satellite toothed wheels 41, as well as to a drum 43 and brake belt 44. In the event that the driver 40 of the satellite toothed wheels 41 are not mechanically joined or connected, then a rope, provided on drum 43, can be unwound. In the event that a brake belt 44, which is operated by a pneumatic system, acts upon the external perimeter of wheel 42, the satellite toothed wheels 41 will start to rotate on the internal surface of wheel 42 which in turn causes rotation of driver 40 such that winding of the rope is effected.

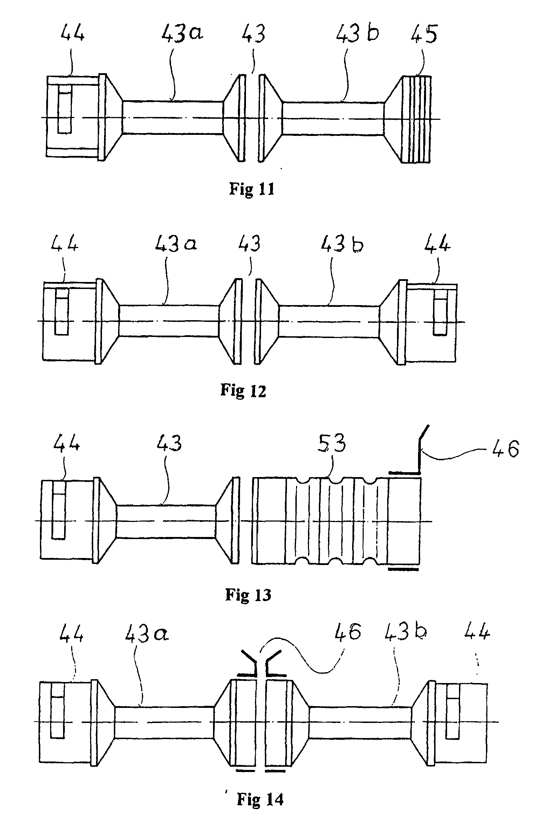

The drum 43 of winding equipment 33 comprises of two parts 43a and 43b As illustrated (see Fig 11), one end of part 43a is provided with a planet gearbox 44 and one end of part 43b is provided with a pneumatically operated multi-plate clutch 45.

Drum 43 can be used to drag loads of lower weight, be used to haul a rope to the load and for pulling out ropes during the assembly of a cableway system.

In a preferred embodiment, the winding equipment 33 may be provided with a planet gearbox 44 on both parts 43a and 43b of drum 43 (see Fig. 12). A drum 43 modified in this manner can be used to haul loads at the same time and moreover, such a modification will increase the lifting force of the winding equipment via pulleys.

In a further preferred embodiment, the drum 43 may be provided with a planet gearbox 44 on one part thereof 43a, and may be provided with formed wheels 53 and braking equipment 46 on the other side 43b (see Fig. 13). A drum 43, modified in this way, has particular application for lowering loads from an elevated position using brakes 46 and for use in a cableway system.

In another preferred embodiment, the ends of each part 43a and 43b of drum 43 are provided with a planet gearbox 44 and braking equipment 46 is provided at the middle of the drum 43 (see Fig. 14).

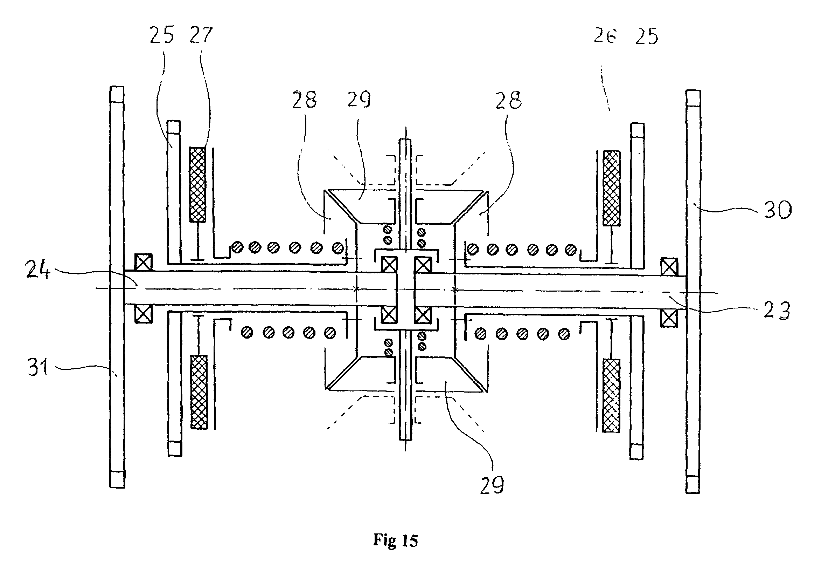

As illustrated (see Figs. 1 and 15), within the body 1 there is located a third disconnecting or disengageable drive shaft 20 provided with second chain wheels 22 at either end thereof. Such chain wheels 22 are connected to, and drive, two separate half-axles 23, 24, and are joined with guide wheels 32 via driving wheels 31. Each half axle 23, 24 are connected to a separate multi-plate clutch 27, 26 and both half axles 23, 24 are connected via toothed wheels 28 having bevelled pinions 29. The third disconnecting drive shaft 20 is for driving the one track, two track, two wheeled or four wheeled version of a vehicle in accordance with the present invention, that is, via the chain wheels 22, which act upon the drives of half axles 23, 24, They are joined to the multi-plate clutches 27, 26, which can change the direction in which the two tracked version of the vehicle is moving or, and when the bevelled pinions 29 are activated at the same time, cause the vehicle to turn around.

Track 13 is driven by the common half-axles 23, 24, which also dives the wheels in the basic single track version of a vehicle in accordance with the present invention.

The drives of half-axles 23, 24 are driven by gearbox 6, via chain wheels 22, operable by handle 5. Disconnection of either of the multi-plate clutches 26 or 27 will result in its associated half axle 23, 24 coming to rest, which will result in a fluent turning of the vehicle.

By operating the operating handle 5 and gear lever at the same time, the drive of the half axle will be connected and the bevelled pinions 29, which are in contact with the toothed wheels 28. will rotate, resulting in adequate movement of the half-axle in a reversible direction which will cause the vehicle to rotate or turn about its own axis.

One of the advantages of a vehicle in accordance with the present invention, is that up until now, small wheeled vehicles of this type were not able to fully turn around, or fully rotate about, their own axis; such range of fuming being required when the vehicle is located in a confined space.

A self-propelled vehicle in accordance with the present invention, when provided with winding equipment 33, can be used for dragging or transporting tree trunks after they have been felled in dense and inaccessible terrain. Such trunks can be transported to the timber store or yard, either by being dragged by a carrying rope, or a rope provided with tackle.

A self-propelled vehicle in accordance with the present invention, when provided with winding equipment 33, may also be used as a mobile ski lift for hauling or lifting skiers. The drawing device could be attached behind the body 1 of the vehicle.

A two wheeled or four wheeled trailer could also be attached to the drawing device or a carrier adapted for dragging the trunks to the timber store or yard.

In a preferred embodiment, a four wheeled version of a self-propelled vehicle in accordance with the present invention is provided with a three point hitch with a seat. All types of agricultural tools may be connected, or attached, to such hitch.

In another preferred embodiment, a snowplough may be attached to the front of the vehicle, and a plastic or metal roller can be attached to the back of the vehicle via such three point hitch. This will enable the front part of the vehicle to be used to scrape away any snow and the back part to lay out the ski slopes.

As outlined above, it is to be understood that a self-propelled vehicle in accordance with the present invention has many uses and hence, much utility. It is to be understood that the above-mentioned examples of the various constructions and versions of a self-propelled vehicle in accordance with the present invention are non-limiting and hence, does not restrict the use or construction of a self-propelled vehicle in accordance with the present invention.

## Claims

1. A self-propelled vehicle having a four stroke engine with electric ignition, the self-propelled vehicle including:
- a body (1) with walls (7-12),
- a gearbox (6) being driven by said engine, having a variator (4) through a pinion (6a),
- at least one track (13) on the walls (7-12) of said body (1),
- a handle (51) with operating controls (52),
**characterized in that**
- said body (1) has the shape of a rounded pentagon,
- said gearbox (6) is located within said body (1),
- within'said body (1) there is further located a first disconnectable drive shaft (18) which is driven by said gearbox (6), and a second disconnectable drive shaft (19) and a third disconnectable drive shaft (20) both of which are driven by said first disconnectable drive shaft (18),
- a common axle (14) adapted to receive a wheel assembly (47) and protruding passed the sides of said track (13) and
- said handle (51) is provided with a housing (52) within said operating controls (52) are located.

2. The self-propelled vehicle of claim 1, wherein movement of said track (13) is effected via rollers (15, 16, 17) which are part of walls (12) of said body (1).

3. The self-propelled vehicle of claim 1 or 2, wherein said body (1) has a horizontal upper wall (7) and a horizontal bottom wall (9) which are connected on the back via a first sloped wall (8) and on the front via a vertical wall (11) and a second sloped wall(10).

4. The self-propelled vehicle of claim 3, wherein
- a first roller (15) is located near the connecting area of said upper wall (7) with said vertical wall (11),
- a second roller (16) is located near the connecting area of said first sloped wall (8) with said bottom wall (9),
- a third roller (17) is located near the connecting area of the second sloped wall (10) with said bottom wall (9) and
- the first and second rollers (15, 16) have a larger diameter than the third roller (17).

5. The self-propelled vehicle of claims 3 or 4, wherein the second sloped wall (10) of said body (1) is provided with wheel attachment means (48) to which a second set of wheels (49) may be attached.

6. The self-propelled vehicle of claim 1, wherein the vehicle is provided with two tracks (13a,13b) located around walls (7,8,9,10 and 11).

7. The self-propelled vehicle of claim 1, wherein a brake wheel (34) is located on the first disconnectable drive shaft (18).

8. The self-propelled vehicle according to claim 7, wherein the brake wheel (34) is acted upon by brake pads (50) located on jaws (35. 36) operable by handle (38).

9. The self-propelled vehicle of claim 1, wherein the second disconnectable drive shaft (19) is connectable to the drive of a winding equipment (33) via chain wheels (21) located on the second disconnectable drive shaft (19).

10. The self-propelled vehicle of claim 9, wherein a central toothed wheel (39) is connected to the second disconnectable drive shaft (19) and wherein the central toothed wheel (39) is in mesh with a internal toothed wheel (42), via satellite toothed wheels (41), and driver (40) and it is mechanically connected at the same time with a drum (43) of the winding equipment (33) and a brake belt (44).

11. The self-propelled vehicle of claim 10, wherein the drum (43) of the winding equipment (33) includes two parts (43a,43b) and wherein one part (43a) of the drum (43) is provided with a planet gear (44) and the outer part (43b) of the drum (43) is provided with a pneumatically operated multi-plate clutch (45).

12. The self-propelled vehicle of claim 10, wherein the drum (43) of the winding equipment (33) includes two parts (43a,43b) and wherein both parts (43a,43b) are provided with a planet gear (44).

13. The self-propelled vehicle of claim 10, wherein the drum (43) of the winding equipment (33) includes two parts (43a,43b) and wherein one part (43a) of the drum (43) is provided with a planet gear (44) and the other or opposite part (43b) of the drum (43) is provided with formed wheels (45) and braking means (46).

14. The self-propelled vehicle according to claim 10, wherein the drum (43) of the winding equipment (33) includes two parts (43a,43b) and wherein both parts (43a,43b) of the drum (43) is provided with a planet gear (44) and wherein at the middle of the drum (43) or between the two parts (43a,43b) of the drum (43) there is provided braking means (46).

15. The self-propelled vehicle of claim 1, wherein the third disconnectable drive shaft (2) is connectable via chain wheels (22) to two independent drivers of half axles (23,24) having drive wheels (30,31), connected to guide wheels (32).

16. The self-propelled vehicle of claim 15, wherein one of the half axles (23) is connected to a multi-plate clutch (26) and the other half axle (24) is connected to a multi-plate clutch (27) and that both half axles (23,24) are joined via toothed wheels (28), which are connected to bevelled pinions (29).

17. The self-propelled vehicle of claim 1, wherein hoisting or lifting equipment is connected to the body (1) of the vehicle.

18. The self-propelled vehicle of claim 17, wherein a two wheeled or four wheeled trailer is connected to the hoisting equipment

19. The self-propelled vehicle of claim 1, wherein a roller is attached to the front of the body (1).

20. The self-propelled vehicle of claim 19, wherein the roller is made from metal.

21. The self-propelled vehicle of claim 19, wherein the roller is made from plastic.

22. The self-propelled vehicle of claim 1, wherein a plough is connected to the front of the vehicle.

23. The self-propelled vehicle of claim 1, wherein a plough or rotary snowplough is attached to the front part of the body (1) of the vehicle.

24. The self-propelled vehicle of claim 1, wherein a carrier is connected to the vehicle.

25. The self-propelled vehicle of claim 1, wherein a three point hitch with a seat and an agricultural implement is joined to the body (1) of the vehicle.

## Patentansprüche

1. Selbstangetriebenes Fahrzeug mit einem mit einer elektrischen Zündung versehenen Viertaktmotor, wobei dieses Fahrzeug folgendes aufweist::
- einen Körper (1) mit Wänden (7-12),
- ein Getriebe (6), das von dem genannten Motor angetrieben wird und einen mit einem Ritzel (6a) arbeitenden Variator (4) aufweist,
- mindestens eine Raupe (13) auf den Wänden (7-12) des genannten Körpers (1),
- einen Griff (51) mit Betriebssteuerungen (52),
**dadurch gekennzeichnet, dass**
- der genannte Körper (1) die Form eines abgerundeten Fünfecks aufweist,
- das genannte Getriebe (6) im genannten Körper (1) angeordnet ist,
- in dem genannten Körper (1) ferner eine vom genannten Getriebe (6) angetriebene, erste ausrückbare Antriebswelle (18), eine zweite ausrückbare Antriebswelle (19) und eine dritte ausrückbare Antriebswelle (20) angeordnet sind, wobei die zweite Antriebswelle und die dritte Antriebswelle durch die genannte erste ausrückbare Antriebswelle (18) angetrieben werden,
- eine für die Aufnahme einer Radanordnung (47) angepasste und aus den Seiten der genannten Raupe (13) hervorstehende, gemeinsame Achse (14) vorgesehen ist und
- der Griff (51) mit einem Gehäuse (52) versehen ist, in dem die Betriebssteuerungen (52) untergebracht sind.

2. Selbstfahrendes Fahrzeug nach Anspruch 1,
**dadurch gekennzeichnet,**
**dass** die Bewegung der genannten Raupe (13) über Rollen (15, 16, 17) bewirkt wird, die ein Teil der Wände (12) des genannten Körpers (1) sind.

3. Selbstfahrendes Fahrzeug nach Anspruch 1 oder 2,
**dadurch gekennzeichnet,**
**dass** der genannte Körper (1) eine horizontale Dachwand (7) und eine horizontale Bodenwand aufweist, die beide auf der Rückseite über eine erste Schrägwand (8) und auf der Vorderseite über eine Vertikalwand (11) und eine zweite Schrägwand (10) miteinander verbunden sind.

4. Selbstfahrendes Fahrzeug nach Anspruch 3,
**dadurch gekennzeichnet, dass**
- eine erste Walze (15) in der Nähe des Verbindungsbereichs der genannten Dachwand (7) und der genannten Vertikalwand (11) angeordnet ist,
- eine zweite Walze (16) in der Nähe des Verbindungsbereichs der genannten ersten Schrägwand (8) und der genannten Bodenwand (9) angeordnet ist,
- eine dritte Walze (17) in der Nähe des Verbindungsbereichs der genannten zweiten Schrägwand (10) und der genannten Bodenwand (9) angeordnet ist und
- die erste Walze (15) und die zweite Walze (16) einen größeren Durchmesser als die dritte Walze (17) aufweisen.

5. Selbstfahrendes Fahrzeug nach Anspruch 3 oder 4,
**dadurch gekennzeichnet,**
**dass** die zweite Schrägwand (10) des genannten Körpers (1) mit einem Radbefestigungsmittel (48) versehen ist, an das ein zweiter Radsatz (49) befestigt werden kann.

6. Selbstfahrendes Fahrzeug nach Anspruch 1,
**dadurch gekennzeichnet,**
**dass** es mit zwei Raupen (13a, 13b) ausgerüstet ist, die um die Wände (7-11) angeordnet sind.

7. Selbstfahrendes Fahrzeug nach Anspruch 1,
**dadurch gekennzeichnet,**
**dass** eine Bremsscheibe (34) auf der ersten ausrückbaren Antriebswelle (18) angeordnet ist.

8. Selbstfahrendes Fahrzeug nach Anspruch 7,
**dadurch gekennzeichnet,**
**dass** auf die Bremsscheibe (34) Bremsbeläge (50) einwirken, die auf durch einen Handgriff (38) betreibbaren Klemmbacken (35, 36) angeordnet sind.

9. Selbstfahrendes Fahrzeug nach Anspruch 1,
**dadurch gekennzeichnet,**
**dass** die zweite ausrückbare Antriebswelle (19) über auf der zweiten ausrückbaren Antriebswelle (19) angeordnete Kettenräder (21) mit der Treibvorrichtung einer Wickeleinrichtung (33) verbindbar ist.

10. Selbstfahrendes Fahrzeug nach Anspruch 9,
**dadurch gekennzeichnet,**
**dass** ein zentrales Zahnrad (39) mit der zweiten ausrückbaren Antriebswelle (19) verbunden ist, dass das zentrale Zahnrad (39) über Satellitenzahnräder (41) und eine Treibvorrichtung (40) im Eingriff mit einem Innenverzahnungsrad (42) steht und dass es gleichzeitig mit einer Trommel (43) der Wickeleinrichtung (33) und einem Bremsgürtel (44) mechanisch verbunden ist.

11. Selbstfahrendes Fahrzeug nach Anspruch 10,
**dadurch gekennzeichnet,**
**dass** die Trommel (43) der Wickeleinrichtung (33) zwei Teile (43a, 43b) aufweist und dass der eine Teil (43a) der Trommel (43) mit einem Planetengetriebe (44) und der andere Teil (43b) der Trommel (43) mit einer pneumatisch betriebenen Mehrplattenkupplung (45) versehen ist.

12. Selbstfahrendes Fahrzeug nach Anspruch 10,
**dadurch gekennzeichnet,**
**dass** die Trommel (43) der Wickeleinrichtung (33) zwei Teile (43a, 43b) aufweist und dass beide Teile (43a, 43b) mit einem Planetengetriebe (44) versehen sind.

13. Selbstfahrendes Fahrzeug nach Anspruch 10,
**dadurch gekennzeichnet,**
**dass** die Trommel (43) der Wickeleinrichtung (33) zwei Teile (43a, 43b) aufweist und dass der eine Teil (43a) der Trommel (43) mit einem Planetengetriebe (44) und der andere oder entgegengesetzte Teil (43b) der Trommel (43) mit geformten Rädern (45) und Bremsmitteln (46) versehen ist.

14. Selbstfahrendes Fahrzeug nach Anspruch 10,
**dadurch gekennzeichnet,**
**dass** die Trommel (43) der Wickeleinrichtung (33) zwei Teile (43a, 43b) aufweist, dass beide Teile (43a, 43b) mit einem Planetengetriebe (44) versehen sind und dass in der Mitte der Trommel (43) oder zwischen den beiden Teilen (43a, 43b) der Trommel (43) Bremsmittel (46) vorgesehen sind.

15. Selbstfahrendes Fahrzeug nach Anspruch 1,
**dadurch gekennzeichnet,**
**dass** die dritte ausrückbare Antriebswelle (2) über Kettenräder (22) mit zwei unabhängigen Treibvorrichtungen aus Halbachsen (23, 24) mit Treibrädern (30, 31) verbindbar sind, die mit Führungsrädern (32) verbunden sind.

16. Selbstfahrendes Fahrzeug nach Anspruch 15,
**dadurch gekennzeichnet,**
**dass** eine der Halbachsen (23) mit einer Mehrplattenkupplung (26) verbunden ist, dass die andere Halbachse (24) mit einer (weiteren) Mehrplattenkupplung (27) verbunden ist und dass beide Halbachsen (23, 24) über Zahnräder (28) miteinander verbunden sind, die mit Kegefritzeln (29) verbunden sind.

17. Selbstfahrendes Fahrzeug nach Anspruch 1,
**dadurch gekennzeichnet,**
**dass** eine Winden- oder Hebevorrichtung mit dem Körper (1) des Fahrzeugs verbunden ist.

18. Selbstfahrendes Fahrzeug nach Anspruch 17,
**dadurch gekennzeichnet,**
**dass** ein zwei oder vier Räder aufweisender Trailer mit der Windenvorrichtung verbunden ist.

19. Selbstfahrendes Fahrzeug nach Anspruch 1,
**dadurch gekennzeichnet,**
**dass** eine Walze an der Vorderseite des Körpers (1) befestigt ist.

20. Selbstfahrendes Fahrzeug nach Anspruch 19,
**dadurch gekennzeichnet,**
**dass** die Walze aus Metall besteht.

21. Selbstfahrendes Fahrzeug nach Anspruch 19,
**dadurch gekennzeichnet,**
**dass** die Walze aus Kunststoff besteht.

22. Selbstfahrendes Fahrzeug nach Anspruch 1,
**dadurch gekennzeichnet,**
**dass** ein Pflug mit der Vorderseite des Körpers (1) verbunden ist.

23. Selbstfahrendes Fahrzeug nach Anspruch 1,
**dadurch gekennzeichnet,**
**dass** ein Pflug oder Drehschneepflug an der Vorderseite des Körpers (1) befestigt ist.

24. Selbstfahrendes Fahrzeug nach Anspruch 1,
**dadurch gekennzeichnet,**
**dass** ein Transporter mit dem Fahrzeug verbunden ist.

25. Selbstfahrendes Fahrzeug nach Anspruch 1,
**dadurch gekennzeichnet,**
**dass** eine Dreipunkt-Anhängekupplung mit einem Sitz und einem Landwirtschaftsgerät mit dem Körper (1) des Fahrzeugs verbunden ist.

## Revendications

1. Véhicule automoteur ayant un moteur à quatre temps avec allumage électrique, le véhicule automoteur comprenant :
- une carrosserie (1) avec parois (7-12),
- une boîte de vitesses (6) étant entraînée par ledit moteur, ayant un variateur (4) à travers un pignon (6a),
- au moins une chenille (13) sur les parois (7-12) de ladite carrosserie (1),
- une poignée (51) avec des éléments de manoeuvre (52),
**caractérisé en ce que**
- ladite carrosserie (1) a la forme d'un pentagone arrondi,
- ladite boîte de vitesses (6) est située à l'intérieur de ladite carrosserie (1),
- à l'intérieur de ladite carrosserie (1) il se trouve en outre un premier arbre de transmission (18) pouvant être débrayé qui est entraîné par ladite boîte de vitesses (6), et un deuxième arbre de transmission (19) pouvant être débrayé et un troisième arbre de transmission (20) pouvant être débrayé qui sont tous les deux entraînés par ledit premier arbre de transmission (18),
- un essieu commun (14) adapté pour recevoir un ensemble roue (47) et dépassant des côtés de ladite chenille (13) et
- ladite poignée (51) est pourvue d'un logement (52) à l'intérieur duquel se situent lesdits éléments de manoeuvre (52).

2. Véhicule automoteur selon la revendication 1, dans lequel le mouvement de ladite chenille (13) est effectué par l'intermédiaire de rouleaux (15, 16, 17) qui font partie des parois (12) de ladite carrosserie (1).

3. Véhicule automoteur selon la revendication 1 ou 2, dans lequel ladite carrosserie (1) a une paroi supérieure horizontale (7) et une paroi inférieure horizontale (9) qui sont raccordées à l'arrière par une première paroi inclinée (8) et à l'avant par une paroi verticale (11) et une deuxième paroi inclinée (10).

4. Véhicule automoteur selon la revendication 3, dans lequel
- un premier rouleau (15) est situé près de la zone de raccordement de ladite paroi supérieure (7) avec ladite paroi verticale (11),
- un deuxième rouleau (16) est situé près de la zone de raccordement de ladite première paroi inclinée (8) avec ladite paroi inférieure (9),
- un troisième rouleau (17) est situé près de la zone de raccordement de la deuxième paroi inclinée (10) avec ladite paroi inférieure (9) et
- les premier et deuxième rouleaux (15, 16) ont un diamètre plus grand que le troisième rouleau (17).

5. Véhicule automoteur selon les revendications 3 ou 4, dans lequel la deuxième paroi inclinée (10) de ladite carrosserie (1) est pourvue d'un moyen d'attachement de roue (48) auquel un deuxième train de roues (49) peut être attaché.

6. Véhicule automoteur selon la revendication 1, dans lequel le véhicule est pourvu de deux chenilles (13a, 13b) situées autour des parois (7, 8, 9, 10 et 11).

7. Véhicule automoteur selon la revendication 1, dans lequel un disque de frein (34) est situé sur le premier arbre de transmission pouvant être débrayé (18).

8. Véhicule automoteur selon la revendication 7, dans lequel le disque de frein (34) est contrôlé par des plaquettes de frein (50) situées sur des mâchoires (35, 36) qui peuvent être manoeuvrées par l'intermédiaire d'une poignée (38).

9. Véhicule automoteur selon la revendication 1, dans lequel le deuxième arbre de transmission pouvant être débrayé (19) peut être accouplé à l'entraînement d'un équipement d'enroulement (33) par l'intermédiaire de roues de chaîne (21) situées sur le deuxième arbre de transmission pouvant être débrayé (19).

10. Véhicule automoteur selon la revendication 9, dans lequel une roue dentée centrale (39) est accouplée au deuxième arbre de transmission pouvant être débrayé (19) et dans lequel la roue dentée centrale (39) est engrenée dans une roue dentée interne (42) par l'intermédiaire de roues dentées satellites (41) et un système d'entraînement (40) et elle est en même temps mécaniquement raccordée à un tambour (43) de l'équipement d'enroulement (33) et à une courroie de frein (44).

11. Véhicule automoteur selon la revendication 10, dans lequel le tambour (43) de l'équipement d'enroulement (33) comprend deux parties (43a, 43b) et dans lequel une partie (43a) du tambour (43) est pourvue d'une roue planétaire (44) et la partie extérieure (43b) du tambour (43) est pourvue d'un embrayage multidisque à air comprimé (45).

12. Véhicule automoteur selon la revendication 10, dans lequel le tambour (43) de l'équipement d'enroulement (33) comprend deux parties (43a, 43b) et dans lequel les deux parties (43a, 43b) sont pourvues d'une roue planétaire (44).

13. Véhicule automoteur selon la revendication 10, dans lequel le tambour (43) de l'équipement d'enroulement (33) comprend deux parties (43a, 43b) et dans lequel une partie (43a) du tambour (43) est pourvue d'une roue planétaire (44) et l'autre partie ou la partie opposée (43b) du tambour (43) est pourvue de roues formées (45) et d'un moyen de freinage (46).

14. Véhicule automoteur selon la revendication 10, dans lequel le tambour (43) de l'équipement d'enroulement (33) comprend deux parties (43a, 43b) et dans lequel les deux parties (43a, 43b) du tambour (43) sont pourvues d'une roue planétaire (44) et dans lequel au milieu du tambour (43) ou entre les deux parties (43a, 43b) du tambour (43) se trouve un moyen de freinage (46).

15. Véhicule automoteur selon la revendication 1, dans lequel le troisième arbre de transmission pouvant être débrayé (2) est raccordé par l'intermédiaire de roues de chaîne (22) à deux systèmes d'entraînement indépendants de demi-essieux (23, 24) ayant des roues motrices (30, 31), raccordés aux roues de guidage (32).

16. Véhicule automoteur selon la revendication 15, dans lequel un des deux demi-essieux (23) est raccordé à un embrayage multidisque (26) et l'autre demi-essieu (24) est raccordé à un embrayage multidisque (27) et dans lequel les deux demi-essieux (23, 24) sont joints par l'intermédiaire de roues dentées (28), qui sont raccordées à des pignons biseautés (29).

17. Véhicule automoteur selon la revendication 1, dans lequel un équipement de hissage ou levage est raccordé à la carrosserie (1) du véhicule.

18. Véhicule automoteur selon la revendication 17, dans lequel une remorque à deux roues ou quatre roues est accrochée à l'équipement de hissage.

19. Véhicule automoteur selon la revendication 1, dans lequel un rouleau est attaché au devant de la carrosserie (1).

20. Véhicule automoteur selon la revendication 19, dans lequel le rouleau est fait de métal.

21. Véhicule automoteur selon la revendication 19, dans lequel le rouleau est fait de plastique.

22. Véhicule automoteur selon la revendication 1, dans lequel une lame est raccordée au devant du véhicule.

23. Véhicule automoteur selon la revendication 1, dans lequel une lame ou un chasse-neige rotatif est attaché au devant de la carrosserie (1) du véhicule.

24. Véhicule automoteur selon la revendication 1, dans lequel un porteur est attaché au véhicule.

25. Véhicule automoteur selon la revendication 1, dans lequel un attelage à trois points avec un siège et un outil agricole est joint à la carrosserie (1) du véhicule.
